# EUROPEAN PATENT SPECIFICATION

(11) **EP 2 403 169 B1**
(45) Date of publication and mention of the grant of the patent: **16.01.2013**
(21) Application number: 10305705.5
(22) Date of filing: 29.06.2010
(51) Int. Cl.: H04J 14/02

(54) **A method in an optical network to allocate a total optical bandwidth**
Verfahren in einem optischen Netzwerk zur Zuweisung einer totalen optischen Bandbreite
Procédé dans un réseau optique pour l'affectation de la totalité de la largeur de bande optique

(43) Date of publication of application: 04.01.2012
(73) Proprietor: Alcatel Lucent, 75007 Paris (FR)
(72) Inventor: Zami, Thierry, 91620, NOZAY (FR)
(74) Representative: Sciaux, Edmond

(56) References cited:
- WO-A1-2007/074979
- US-A1- 2010 158 529
- KOZICKI B ET AL: "Filtering characteristics of highly-spectrum efficient spectrum-sliced elastic optical path (SLICE) network", OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467522, ISBN: 978-1-4244-2606-5

## Description

The technical domain of the invention is the domain of communication networks and particularly the domain of bandwidth allocation in optical networks.

In an optical network, telecommunication operators are used to aggregate the traffic demands to optimize the bandwidth and other resource utilization. In an opaque optical network, this operation is usually performed by time division multiplexing (TDM) of several different connections within the electronic routing fabrics. Such method can multiplex several connections whatever their data rate with a very low granularity (for instance down to STM-1 for the SDH protocol) and so a better sharing of the wavelengths of the optical network between the traversed network nodes is enabled.

However, one of the main trends of the optical network is the introduction of, at least partial, transparency in order to reduce the total number of required optoelectronic transponders. Such evolution makes more difficult the aforementioned efficient aggregation. In fact, it is still possible to aggregate by means of Wavelength Division Multiplexing (WDM) as proposed e.g. by the multi-granular switching approach as disclosed by e.g. the three following documents:
Kiyo Ishii, Hiroshi Hasegawa, Ken-Ichi Sato, Masayuki Okuno, Shin Kamei, Hiroshi Takahashi: "An Ultra-compact Waveband Cross-connect Switch Module to Create Cost-effective Multi-degree Reconfigurable Optical Node", Paper 4.2.2, ECOC'2009; Kiyo Ishii, Hiroshi Hasegawa, Ken-Ichi Sato: "Route and Wavelength/Waveband Assignment for Creation of Compact Hierarchical Optical Cross-Connect for Multi-Ring Connection", Paper 4.6.2, ECOC 2009;
Kiyo Ishii, Osamu Moriwaki, Hiroshi Hasegawa, Ken-Ichi Sato, Yoshiteru Jinnnouchi, Masayuki Okuno, Hiroshi Takahashi: "Efficient ROADM-ring Connecting Node Switch Architecture that Utilizes Waveband Routing and its Realization with PLC Technologies", Paper 5.3.1, ECOC'2009.

Such interesting optical grooming is achievable by means of simple optical couplers or/and optical multiplexers. In a multi-granularity context, it reduces the optical filtering impact on the WDM channels and it also reduces the size (in terms of number of ports) of the optical cross-connects (OXC). But the resulting aggregation granularity (equal to the data rate of the multiplexed channels) is far bigger than the one of the electronic aggregation. Above all, the resulting spectral efficiency is also worst because the possible residual available capacity of one channel remains unused by the other WDM channels even if they have been gathered in the same waveband by a multi-granular optical node.

In such context, the invention proposes a new operating mode for the optical aggregation in order to achieve very spectral-efficient sub-lambda aggregation.

One solution to this problem is to exploit the recently validated new coding methods (Orthogonal Frequency Division Multiplexing, OFDM) and/or new detection methods such as coherent detection with electronic post-processing to achieve more flexible optical aggregation. Hence, is disclosed in the two following documents:
M. Jinno, H. Takara, B. Kozicki, Y. Tsukishima, T. Yoshimatsu, T. Kobayashi, Y. Miyamoto, K. Yonenaga, A. Takada, O. Ishida, and S. Matsuoka, "Demonstration of Novel Spectrum-Efficient Elastic Optical Path Network with Per-Channel Variable Capacity of 40 Gb/s to Over 400 Gb/s", Paper Th.3.F.6, ECOC'2008;
Bartlomiej Kozicki, Hidehiko Takara, Yukio Tsukishima, Toshihide Yoshimatsu, Takayuki Kobayashi, Kazushige Yonenaga, Masahiko Jinno: "1 Tb/s Optical Path Aggregation with Spectrum-Sliced Elastic Optical Path Network SLICE", Paper 8.3.5, ECOC 2009; z
what is called a "spectrum-efficient elastic optical path network (SLICE)" for 100 Gb/s services and beyond, with flexible rate transceivers and variable-bandwidth wavelength cross-connects based on Wavelength Selective Switch (WSS).

In fact, considering that the optical packet technology is not yet mature enough to bring full flexibility inside the core optical networks, they propose an intermediate circuit aggregation approach based on OFDM. The method is able to gather on a given waveband different circuits with different bandwidths. It is also able to separate them by means of the variable-bandwidth WSSs and provided that a sufficient guard band is maintained between the adjacent OFDM circuits, as detailed in : Bartlomiej Kozicki, Hidehiko Takara, Toshihide Yoshimatsu, Kazushige Yonenaga, Masahiko Jinno: "Filtering Characteristics of Highly-Spectrum Efficient Spectrum-Sliced Elastic Optical Path (SLICE) Network", Paper JWA43, OFC'2009.

To achieve that task, the variable-bandwidth WSS should be able to tune the edges of its filtering and blocking transfer functions in the optical frequency domain with a very good accuracy smaller than few GHz. Such WSSs exist but are not yet as mature as conventional WSSs operating on standard ITU grid. Hence the current prototypes are too expensive and exhibit twice less ports (4 instead of 9). This latter limitation may impact the cost-efficiency and the connectivity of the cross-connects based on these variable-bandwidth WSSs.

WO 2007/074979 discloses a multiple star wavelength division multiplexing passive optical network system using a wavelength assignment method. In a multiple star wavelength division multiplexing passive optical network system using a wavelength assignment method according to the present invention, only one WDM-PON system can provide services for a plurality of subscribers who is distributed in a wide range of area through multiple starring, by setting one or more band for transmitting up-stream signals as an up-stream basic band and one or more band for transmitting down-stream signals as a downstream basic band, respectively, and by dividing each of the up-stream basic band and the downstream basic band into a plurality of wavelength sub-bands and assigning the divided sub-bands to different areas using a wavelength division multiplexer/demultiplexer which splits a band into two or more sub-bands.

US 2010/158529 discloses a method of configuring a wavelength division multiplexed (WDM) network. The WDM network includes circuits that carry optical signals, with each signal corresponding to a wavelength. The WDM network includes nodes, with links connecting the nodes to one another. Each circuit includes at least one link and at least one node. The method comprises assigning each of the circuits to an optical signal, based on first and second criteria, and configuring the nodes based on the assignment.

Actually, the method according to the invention proposes to build an optical bus that gathers the traffic demands along the OXC nodes it goes through by aggregating the corresponding circuit connections on a given optical bandwidth.

The invention also assumes that this aggregation has the important following property: all these collected traffic contributions should have the same final destination node in the network.

Hence an advantage of the invention is that no spatial separation is needed before the final dropping. When this aggregating bandwidth arrives at the common egress destination node, the different circuits are individually separated and received by means of coherent detection.

This important feature of common destination makes advantageously the utilization of variable-bandwidth WSSs no more necessary. The global spectral efficiency can also be improved because the separation by coherent detection does not need frequency space or intermediary guard band between the circuits as large as the one needed to separate channels by usual optical filtering.

The present invention addresses and solves the aforementioned problems by providing a trade-off solution capable of mixing usual WDM channels and a partial optical aggregation of circuits with high spectral efficiency.

Advantageously, the invention can keep using standard WSSs.

The mixing of usual WDM channels and partial optical aggregation may advantageously offer a transition step approach toward a future total optical aggregation solution while saving actual investments, e.g. by keeping the standard WSSs.

The invention concerns a method, in an optical network mixing usual WDM channels and optically aggregated circuits, to allocate a total optical bandwidth with high spectral efficiency, between two adjacent nodes, comprising the steps of:
- defining a partition of said total optical bandwidth into fixed sub-bands, according to a fixed WDM grid,
- dedicating a given number of extreme contiguous sub-bands, taken near one end of said total optical bandwidth, to usual WDM channels,
- dedicating the remaining band wholly comprising remaining sub-bands, which are not dedicated to WDM channels, to optically aggregated circuits ending at the same destination node,
- placing at least a first set of circuits on one end of said remaining band,
- placing at least a second set of circuits on the other end of said remaining band,
- packing circuits so as to create, at least one free bandwidth space between said first and second sets of circuits.

According to another feature of the invention, the width of each of said at least zero free bandwidth space is at least equal to the bandwidth occupied by a circuit modulated at the lowest data rate, in order to allow a future allocation to a circuit.

According to another feature of the invention, the method further comprises the steps of:
- interspersing adjacent circuits with an intermediary guard band,
- boarding the remaining band at both ends with a boarding guard band.

According to another feature of the invention, an intermediary guard band is 10 GHz width and a boarding guard band is 15 GHz width.

According to another feature of the invention, said number of sub-bands dedicated to usual WDM channels is determined first, then a set of circuits able to fill the remaining band is selected.

According to another feature of the invention, a set of circuits to be aggregated is selected first, then determining the number of sub-bands left fully unoccupied by said circuits packed to be dedicated to usual WDM channels.

The invention also concerns a method, in an optical network mixing usual WDM channels and optically aggregated circuits, to allocate a total optical bandwidth with high spectral efficiency, in the whole network, comprising, for a given destination node, the steps of:
- for each segment between two nodes/routers, starting from the farthest source node and going downstream until the destination node,
- selecting a candidate set of circuits ending at said destination node over said segment,
- allocating bandwidth for said segment according to the previous method, while maintaining circuits previously allocated at upstream segment,
- iterate until a solution is found,
- iterate until a solution is found and destination node is reached.

Others features, details and advantages of the invention will become more apparent from the detailed illustrating description given hereafter with respect to the drawings on which:
- figure 1 is a schematic of an illustrative optical network,
- figure 2 is a diagram showing bandwidth allocation along a connection,
- figure 3 is another diagram showing bandwidth allocation along a connection.

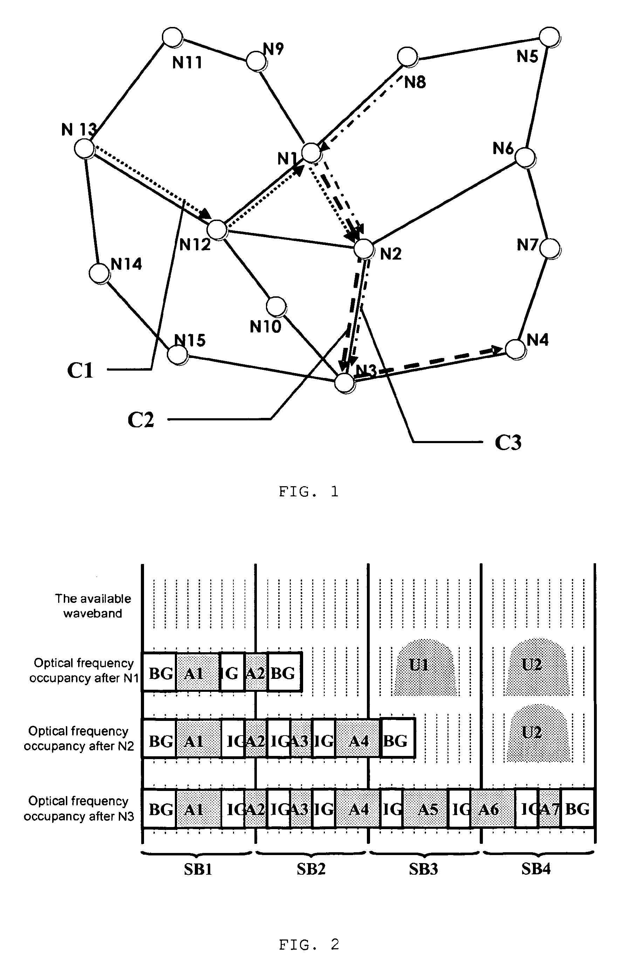

According to figure 1, illustrating an example of an optical network in which the invention can take place, said network comprises nodes N1-N15 linked by segments. A segment is referred to by its two ending nodes. I.e. the segment linking node N1 to node N2 is referred to by N1-N2.

The network may e.g. use PDM-QPSK wavelength-agile transponders also able to tune their modulation rate between 10 Gb/s and 40 Gb/s (without accounting for the extra bit rate due to Forward Error Correction code) with a granularity of 1 Gb/s.

As an example, the traffic matrix is the following: 60 Gb/s from N1 to N4, 60 Gb/s from N2 to N4 and 100 Gb/s from N3 to N4. It is assumed that a total bandwidth, corresponding to four adjacent sub-bands SB1-SB4 of a 50 GHz ITU grid, is available from N1 to N4 through N2 and N3.

In this illustrative optical network three connections C1-C3 must be established. Connection C1 starts at node N13 and ends at node N2. Since said connection C1 crosses nodes N12 and N1 it can also be referred to by N13-N12-N1-N2. Connection C2 starts at node N1 and ends at node N4, passing by N2 and N3. C2 can also be referred to by N1-N2-N3-N4. Connection C2 is composed, from it farthest source node N1 downstream to its destination node N4, of three segments: N1-N2, N2-N3, and N3-N4. Connection C3 starts at node N8 and ends at node N3, passing by N1 and N2. C3 can also be referred to by N8-N1-N2-N3.

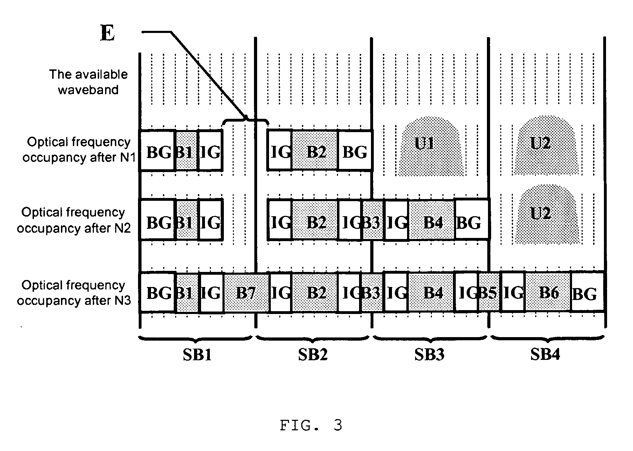

In the following, connection C2 is chosen as a support for describing the allocation method of the invention. The bandwidth allocation is illustrated by diagrams of figures 2 and 3.

The method according to the invention tries to mix usual WDM channels U1, U2, and optically aggregated circuits A1-A7, B1-B7, and to allocate bandwidth with high spectral efficiency.

Figures 2 and 3 shows a diagram of optical bandwidth allocation, along said connection C2. Figure 2 shows the result of a first obvious allocation method, and figure 3 shows the result of an enhanced allocation method according to the invention.

The first line of the diagrams shows the total bandwidth available. At the beginning of the method said total bandwidth is totally free. Each following line shows the cumulative allocation resulting from the method after allocating for a segment along said connection C2, starting from the farthest source node of connection C2, here N1, and going downstream towards the destination node of connection C2, here N4. The second line corresponds to segment N1-N2. The third line corresponds to segment N2-N3. The third line corresponds to segment N3-N4.

The method comprises several steps. A first step consists in parting said total optical bandwidth into fixed sub-bands SB1-SB4, according to a fixed WDM grid. Here in the example, the grid comprises four sub-bands SB1-SB4 of equal width. If a standard ITU grid is selected said width may be e.g. 50 GHz as illustrated. Any other grid spacing may also be used.

Over each segment linking two adjacent nodes, a number of usual WDM channels is given. The keeping of such "old fashion" usual WDM channels U1, U2, mixed with "new" aggregated circuits A1-A7, B1-B7, is very advantageous to provide a smooth transition between actual networks with only WDM channels according to an ITU grid, towards future networks where a majority of aggregated circuits A1-A7, B1-B7, eventually mixed with WDM channels would be found.

Considering the first segment N1-N2, as shown at figure 1, said segment is shared between connections C1, C2 and C3. Since C1 comprises a first usual WDM channel U1, and C3 comprises a second usual WDM channel U2, here the number of usual WDM channels is two. So two sub-bands out of the total bandwidth must be dedicated to said usual WDM channels U1, U2, for this specific segment. Advantageously, said two sub-bands are chosen contiguous and extreme with respect to the total bandwidth, that is, near one end of said total bandwidth. Here, sub-bands SB3 and SB4 are selected near the right end of said total bandwidth.

The remaining band composed of remaining sub-bands, here SB1 and SB2, is then dedicated as a whole to optically aggregated circuits. On this remaining band, a 60 Gb/s traffic must be allocated. Due to the aforementioned limitation to 40 Gb/s per circuit, two circuits A1, A2, respectively B1, B2 of respective width of 20 Gb/s and 40 Gb/s may be used and must be allocated.

According to figure 2, rather naturally, all circuits A1-A2 are aggregated by packing them together and locating the resulting aggregate against one end of said remaining bandwidth, here the left end.

According to an important feature of the invention, said allocation of the remaining band is advantageously rather done in the following manner, illustrated by figure 3:
- a first set of circuits, here a set reduced to the single circuit B1, is placed on one end of said remaining band, here the left end,
- then a second set of circuits, here a set reduced to the single circuit B2, is placed on the other end, here the right end, of said remaining band.

The packing step is here trivially reduced to none, since B1 and B2 are single circuits. So doing, the circuits B1, B2 advantageously free a bandwidth space E between circuit B1 and circuit B2, that is, inside the remaining band, in between the circuits. This new space E is very helpful in that it reduces the non-linear effects between the circuits of the aggregation.

Said bandwidth space E between some of the circuits B1, B2, of the aggregated circuit bandwidth may relax the inter-channels non linear effects such as the XPM and the FWM. This applies at least for the earliest circuits B1, B2, that have been inserted by the first network nodes traversed, at the first segments, before the aggregated circuit bandwidth becomes totally full.

Since these earliest circuits B1, B2, are also the ones experiencing the longest transmission reach, such mitigation of the non-linear effect is of strong interest.

In the same time, it is noticeable that this bandwidth space E does not reduce the number of conventional circuits that could be allocated in the remaining bandwidth. As can be seen by comparing figure 2 and figure 3, the same number of circuits of the same size may be allocated on each line of the two figures 2, 3. This is due to the fact that the cumulative width of said bandwidth free spaces E, added to the width of the circuit bandwidths, added to the maybe guard band (as explained later) is exactly equal to the width of the sub-bands let free by the allocation of the usual WDM channels U1, U2.

Advantageously, the respective width of said at least one free bandwidth space E are determined such as to allow a future allocation to a circuit. In the example supporting the description, each individual width of a free space E is chosen at least equal to the bandwidth occupied by a circuit modulated at the lowest data rate, that is 10 Gb/s in accordance with the aforementioned transponders agility between 10 Gb/s and 40 Gb/s.

As illustrated on both figure 2 and 3, the method may further comprises a step of including guard band IG, BG, in remaining bandwidth in between circuit bandwidths A1-A7, B1-B7. One can intersperses every two adjacent circuits with an intermediary guard band IG. One can also add to both ends/borders of the remaining bandwidth a border guard band BG.

Thanks to the chosen modulation scheme (PDM-QPSK) it is possible to transmit a X Gb/s PDM-QPSK signal occupying only X/2 GHz on the optical frequency domain, assuming the added signal is filtered enough to avoid detrimental crosstalk between the adjacent optical circuit circuits. To obtain good signal isolation by the coherent detection, a minimum 10 GHz frequency intermediary guard band IG between two adjacent circuits, is necessary. Moreover, to limit the harmfulness of the optical filtering, the border guard bands BG at both ends of the remaining bandwidth must be set to 15 GHz.

So doing, the centre optical frequency of a 43 Gb/s PDM-QPSK sub-band, located at the edge of the total bandwidth, is at 25 GHz from the border of the total bandwidth. This frequency shift corresponds exactly to the regular ITU position if the optical band is itself aligned on the positions of a 50 GHz ITU grid. Thanks to said choice for the guard bands, two adjacent 40 Gb/s PDM-QPSK channels inside the band are separated by 30 GHz (instead of 50 GHz in conventional systems). So doing, said choice for the guard bands clearly improve spectral efficiency.

It must be kept in mind that an optical bus for the whole connection C2 is a global goal of the method. So, once a circuit is allocated to a given bandwidth, it is allocated for the whole connection and can not be moved or reused. This must be kept in mind when globally optimizing the allocation of the remaining band to aggregated circuits along a connection. New allocated circuits must be allocated only in non previously allocated spectral spaces. However, every new allocation may try to pack old and new circuits and at the same time arrange free spaces to facilitate the allocating and packing step for the following segments.

Considering now the second segment N2-N3, as shown at figure 1, said segment is shared between connections C2 and C3. The usual WDM channel U1 is thus no longer needed, and the free sub-band SB3 may then be added to the remaining bandwidth to be allocated to aggregated circuits. Connection C3 still comprises the usual WDM channel U2. Here the number of usual WDM channels is one. A single sub-band SB4 must be dedicated to said usual WDM channel U2. Advantageously, said sub-band is chosen extreme with respect to the total bandwidth, that is, near one end of said total bandwidth. Here, sub-band SB4 is selected near the right end of said total bandwidth. Since, along a transparent connection on the optical domain, an allocated channel or circuit can not be moved until it reaches its destination node, U2 is allocated sub-band SB4 for segment N2-N3. This is also retro actively imposed for N1-N2, and determines the allocation of U1 to SB3.

The remaining band composed of the remaining sub-bands, here SB1, SB2 and SB3, is then dedicated as a whole to optically aggregated circuit. At this stage, circuits previously allocated, here B1, B2, during the allocation process for the previous segments, here the first segment N1-N2, can not be moved. However the remaining band is now enlarged by the addition of a new sub-band SB3. On said N2-N3 segment a 60 Gb/s traffic must be allocated. Due to the aforementioned limitation to 40 Gb/s, two others new circuits B3, B4 of respective length of 40 Gb/s and 20Gb/s may be used and must be allocated.

According to the important feature of the invention, said allocation of the remaining band is advantageously rather done in the following manner, illustrated by figure 3:
- circuits already allocated during previous segments allocations are kept at the same spectral place,
- a first set of circuits, here a set reduced to the previously already allocated single circuit B1, is placed/maintained on one end of said remaining band, here the left end,
- then a second set of circuits, here a set comprising circuits B3 and B4, is placed on the other end, here the right end, of said remaining band while keeping B2 unchanged, at the same spectral place. This process keeps the previously allocated circuits B1 and B2 exactly at the same place in the bandwidth, while packing some circuits here B2, B3 and B4.

This again advantageously keeps free the bandwidth space E between B1 and the packed circuits B2, B3 and B4, that is, inside the remaining band, and at the same place. This bandwidth space E is maintained, as long as possible, to reduce non linear effects.

Advantageously, an optimized final filling ratio of the remaining bandwidth may be obtained, if the bandwidth space E is wide enough to allow allocation of one of the other circuits B7 allocated in one of the remaining bandwidths considered when allocating for one of the future following segments, N2-N3 and N3-N4. The at least one bandwidth space E is then maintained free as long as possible along the connection C2, from N1 to N4.

This is the case in the example, where bandwidth space E is maintained at segments N1-N2 and N2-N3. However during the allocation for segment N3-N4, bandwidth space E is used to allocate an additional circuit B7.

Considering now the third segment N3-N4, as shown at figure 1, said segment is only used by connection C2. The usual WDM channel U2 is thus no longer needed, and the free sub-band SB4 may then be added to the remaining bandwidth to be allocated to aggregated circuits. Here the number of usual WDM channels is zero.

The remaining band, here equal to the total bandwidth is then dedicated as a whole to optically aggregated circuits. At this stage, circuits, B1, B2, B3, B4 previously allocated during the allocation process for the first segment N1-N2 and second segment N2-N3, can not be moved. However, the remaining band is now enlarged by the addition of the new sub-band SB4. On this remaining band, a 100 Gb/s additional traffic must be allocated. Due to the aforementioned limitation to 40 Gb/s, this can be done by adding three new circuits B5, B6, B7 of respective width of 20Gb/s, 40 Gb/s and 40 Gb/s.

According to the important feature of the invention, said allocation of the remaining band is advantageously rather done in the following manner, illustrated by figure 3:
- circuits already allocated during previous segments allocations are kept at the same spectral place,
- a first set of circuits, here a set reduced to the previously already allocated single circuit B1, is placed/maintained on one end of said remaining band, here the left end,
- then a second set of circuits, here the circuits B2, B3, B4, B5 and B6 are packed together, while keeping the previously allocated circuits B2, B3 and B4 at the same spectral place, and placed on the other end, here the right end, of said remaining band.

In addition the circuit B7 is here allocated using the bandwidth space E. Here, due to the traffic load with respect to the available remaining bandwidth, it is no longer possible to keep said bandwidth space E free.

Advantageously, in order to obtain a globally optimized final filling ratio of the total bandwidth, the allocation process of the waveband should be driven by a global network controller aware of all the traffic demands along a connection C2 where aggregation of circuits is considered.

The way to fill up bandwidth by allocation according to the invention is not unique. Several solutions may be equally optimal in term of spectral efficiency.

Since the allocation process for one segment is dependant of the allocation choice made for other segments, iterations may be applied with different candidate circuits allocated in different places in the bandwidth, until at least a global solution or until an optimal solution is found. This necessitates the knowledge of all the traffic demands along the connection where the allocation of bandwidth method is considered for aggregated circuits.

In the preceding description of the method a number of usual WDM channels U1, U2, corresponding to a number of sub-bands SB1-SB4 is given. Said number can be determined in two different ways depending on the priority given either to usual WDM channels U1, U2, or to the aggregated circuits B1-B7.

If priority is given to usual WDM channels U1, U2, said number of sub-bands SB1-SB4 dedicated to usual WDM channels U1, U2, is determined first. This determines the width of the remaining bandwidth by merging the sub-bands let free. Then accordingly, a set of circuits B1-B7, able to exactly fill said remaining bandwidth, taking into account intermediary and border guard bands IG, BG, and if applicable one or several free spaces E are selected.

If priority instead is given to aggregated circuits B1-B7, a set of circuits B1-B7 to be aggregated is selected first. Said circuits are packed, taking into account intermediary and border guard bands IG, BG. This determines a packed bandwidth. Said packed bandwidth is rounded up to an integer number of sub-bands. In other words, any sub-band partially occupied by said packed bandwidth is fully dedicated to aggregated circuits. The number of sub-bands left fully unoccupied by said circuits packed in said packed bandwidth is the number dedicated to usual WDM channels. The bandwidth that must eventually be added to said packed bandwidth to round it up indicates the total width available to eventually free bandwidth space(s) E.

Under the condition of exhibiting perfectly flat transfer functions on the amplitude and on the phase domains between two adjacent sub-bands SB1-SB4, standard WSSs aligned on regular standardized optical frequency grids, such as ITU grid, can be used either as a transparent node or as a receiver node to manage a bandwidth as allocated by the method of the invention, when configured in passing state, at least for sub-bands corresponding to aggregated circuits.

This feature enables a good transmission of all sub-bands corresponding to the aggregated circuits whatever the spectral position of each circuit B1-B7 inside this bandwidth, even if the position of a circuit is not aligned on the standard positions of standardized, such as an ITU, grid. This is very advantageous until agile WSS technology allowing a finer tuning granularity such as for instance 1 GHz becomes available at reasonable cost.

It must also be noticed that the invention is valid whatever the modulation scheme of the aggregated circuits (OFDM, PDM- (X) PSK, etc).

## Claims

1. A method, in an optical network mixing usual WDM channels (U1, U2) and optically aggregated circuits (B1-B7), to allocate a total optical bandwidth with high spectral efficiency, between two adjacent nodes (N1-N13), comprising the steps of:
- defining a partition of said total optical bandwidth into fixed sub-bands (SB1-SB4), according to a fixed WDM grid,
- dedicating a given number of contiguous sub-bands (SB1-SB4), taken near one end of said total optical bandwidth, to usual WDM channels,
- dedicating the remaining band, wholly comprising remaining sub-bands (SB1-SB4) which are not dedicated to WDM channels, to optically aggregated circuits (B1-B7) ending at the same destination node (N4), ***characterized in that*** it further comprises the steps of:
- placing at least a first set of circuits (B1) on one end of said remaining band,
- placing at least a second set of circuits on the other end of said remaining band,
- packing circuits so as to create at least one free bandwidth space (E) between said first and second sets of circuits.

2. The method of claim 1, wherein the width of each of said at least one free bandwidth space (E) is at least equal to the bandwidth occupied by a circuit modulated at the lowest data rate, in order to allow a future allocation to a circuit.

3. The method of claim 1 or 2, further comprising the steps of:
- interspersing adjacent circuits (B1-B7) with an intermediary guard band (IG),
- bordering the remaining band at both ends with a border guard band (BG).

4. The method of claim 3, wherein an intermediary guard band (IG) is 10 GHz width and a border guard band (BG) is 15 GHz width.

5. The method of any one of claims 1 to 4, wherein said number of sub bands dedicated to usual WDM channels (U1, U2) is determined first, then a set of circuits (B1-B7) able to fill the remaining band is selected.

6. The method of any one of claims 1 to 4, wherein a set of circuits (B1-B7) to be aggregated is selected first, then determining the number of sub-bands (SB1-SB4) left fully unoccupied by said circuits (B1-B7) packed to be dedicated to usual WDM channels (U1, U2).

7. A method, in an optical network mixing usual WDM channels (U1, U2) and optically aggregated circuits (B1-B7), to allocate a total optical bandwidth with high spectral efficiency, in the whole network, ***characterized in that*** it comprises, for a given destination node (N4), the steps of:
- for each segment between two nodes, starting from the farthest source node (N1) and going downstream until the destination node (N4),
- selecting a candidate set of circuits ending at said destination (N4) node over said segment,
- allocating bandwidth for said segment according to the method of any one of claims 1 to 6, while maintaining circuits previously allocated at upstream segment,
- iterate until a solution is found,
- iterate until a solution is found and destination node (N4) is reached.

## Patentansprüche

1. Verfahren, in einem optischen Netzwerk, in welchem übliche WDM-Kanäle (U1, U2) und optisch aggregierte Schaltungen (B1-B7) gemischt werden, zur Verteilung einer optischen Gesamtbandbreite mit hoher spektraler Effizienz zwischen zwei benachbarten Knoten (N1-N13), die folgenden Schritte umfassend:
- Definieren einer Partitionierung der besagten optischen Gesamtbandbreite in festgelegte Teilbänder (SB1-SB4) gemäß einem festgelegten WDM-Gitter,
- Zuordnen einer gegebenen Anzahl von angrenzenden Teilbändern (SB1-SB4), welche nahe einem Ende der besagten optischen Gesamtbandbreite entnommen werden, zu üblichen WDM-Kanälen,
- Zuordnen des übrigen Bandes, welches alle übrigen Teilbänder (SB1-SB4), die keinen WDM-Kanälen zugeordnet sind, umfasst, zu optisch aggregierten Schaltungen (B1-B7), welche an demselben Zielknoten (N4) enden, ***dadurch gekennzeichnet, dass*** das Verfahren weiterhin die folgenden Schritte umfasst:
- Positionieren mindestens eines ersten Satzes von Schaltungen (B1) an einem Ende des besagten übrigen Bandes,
- Positionieren mindestens eines zweiten Satzes von Schaltungen am anderen Ende des besagten übrigen Bandes,
- Verpacken von Schaltungen, um mindestens einen freien Bandbreitenraum (E) zwischen dem besagten ersten und dem besagten zweiten Satz von Schaltungen herzustellen.

2. Verfahren nach Anspruch 1, wobei die Breite des besagten mindestens einen freien Bandbreitenraums (E) oder aller freien Bandbreitenräume (E) mindestens der von einer mit der niedrigsten Datenrate modulierten Schaltung belegten Bandbreite entspricht, um eine zukünftige Zuordnung zu einer Schaltung zu ermöglichen.

3. Verfahren nach Anspruch 1 oder 2, weiterhin die folgenden Schritte umfassend:
- Einfügen eines Schutzbands (IG) zwischen benachbarte Schaltungen (B1-B7) (TG),
- Begrenzen des übrigen Bands an beiden Enden mit einem abgrenzenden Schutzband (BG).

4. Verfahren nach Anspruch 3, wobei ein zwischenliegendes Schutzband (IG) eine Breite von 10 GHz und ein abgrenzendes Schutzband (BG) eine Breite von 15 GHz aufweist.

5. Verfahren nach einem beliebigen der Ansprüche 1 bis 4, wobei zuerst die besagte Anzahl der den üblichen WDM-Kanälen (U1, U2) zugeordneten Teilbänder bestimmt und anschließend ein Satz von Schaltungen (B1-B7), welcher geeignet ist, das übrige Band zu füllen, ausgewählt wird.

6. Verfahren nach einem beliebigen der Ansprüche 1 bis 4, wobei zuerst ein Satz von zu aggregierenden Schaltungen (B1-B7) ausgewählt und anschließend die Anzahl der von den besagten für die Zuordnung zu den üblichen WDM-Kanälen (U1, U2) verpackten Schaltungen (B1-B7) vollkommen unbelegt gelassenen Teilbänder (SB1-SB4) bestimmt wird.

7. Verfahren, in einem optischen Netzwerk, in welchem übliche WDM-Kanäle (U1, U2) und optisch aggregierte Schaltungen (B1-B7) gemischt werden, zur Verteilung einer optischen Gesamtbandbreite mit hoher spektraler Effizienz in dem gesamten Netzwerk, ***dadurch gekennzeichnet, dass*** es für einen gegebenen Zielknoten (N4) die folgenden Schritte umfasst:
- Für jedes Segment zwischen zwei Knoten, beginnend an dem am weitesten entfernten Quellknoten (N1) stromabwärts bis zum Zielknoten (N4),
- Auswählen, über das besagte Segment hinweg, eines Anwärtersatzes von Schaltungen, welcher an dem besagten Zielknoten (N4) endet,
- Zuordnen von Bandbreite für das besagte Segment gemäß dem Verfahren nach einem beliebigen der Ansprüche 1 bis 6, unter Beibehalten von zuvor zugeordneten Schaltungen an dem sich stromaufwärts befindlichen Segment,
- Wiederholen, bis eine Lösung gefunden wird,
- Wiederholen, bis eine Lösung gefunden und der Zielknoten (N4) erreicht wird.

## Revendications

1. Procédé, dans un réseau optique qui mélange des canaux WDM (U1, U2) conventionnels et des circuits (B1-B7) regroupés optiquement, pour attribuer une largeur de bande optique totale avec un haut rendement spectral entre deux noeuds adjacents (N1-N13), comprenant les étapes suivantes :
- définition d'une partition de ladite largeur de bande optique totale en sous-bandes fixes (SB1-SB4), conformément à une grille WDM donnée,
- dédicace d'un nombre donné de sous-bandes contiguës (SB1-SB4), prises à proximité d'une extrémité de ladite largeur de bande optique totale, aux canaux WDM conventionnels,
- dédicace de la bande restante, comprenant intégralement les sous-bandes (SB1-SB4) restantes qui ne sont pas dédiées aux canaux WDM, aux circuits (B1-B7) regroupés optiquement qui se terminent au même noeud destinataire (N4), *caractérisé en ce qu*'il comprend en outre les étapes suivantes :
- placement d'au moins un premier ensemble de circuits (B1) à une extrémité de ladite bande restante,
- placement d'au moins un deuxième ensemble de circuits à l'autre extrémité de ladite bande restante,
- compactage des circuits de manière à créer au moins un espace de largeur de bande libre (E) entre lesdits premier et deuxième ensembles de circuits.

2. Procédé selon la revendication 1, selon lequel la largeur de chacun desdits au moins un espace de largeur de bande libre (E) est au moins égale à la largeur de bande occupée par un circuit modulé au débit de données le plus faible afin de permettre une future attribution à un circuit.

3. Procédé selon la revendication 1 ou 2, comprenant en outre les étapes suivantes :
- intercalage d'une bande de garde (TG) intermédiaire entre les circuits adjacents (B1-B7),
- bordage de la bande restante aux deux extrémités avec une bande de garde de bordure (BG).

4. Procédé selon la revendication 3, selon lequel une bande de garde intermédiaire (IG) présente une largeur de 10 GHz et une bande de garde de bordure (BG) présente une largeur de 15 GHz.

5. Procédé selon l'une quelconque des revendications 1 à 4, selon lequel ledit nombre de sous-bandes dédiées aux canaux WDM (U1, U2) conventionnels est déterminé en premier, puis un ensemble de circuits (B1-B7) capables de remplir la bande restante est sélectionné.

6. Procédé selon l'une quelconque des revendications 1 à 4, selon lequel un ensemble de circuits (B1-B7) à compacter est sélectionné en premier, suivi de la détermination du nombre de sous-bandes (SB1-SB4) laissées entièrement inoccupées par lesdits circuits (B1-B7) compactés à dédier aux canaux WDM (U1, U2) conventionnels.

7. Procédé, dans un réseau optique qui mélange des canaux WDM (U1, U2) conventionnels et des circuits (B1-B7) regroupés optiquement, pour attribuer une largeur de bande optique totale avec un haut rendement spectral dans la totalité du réseau, ***caractérisé en ce* qu'**il comprend, pour un noeud destinataire (N4) donné, les étapes suivantes :
- pour chaque segment entre deux noeuds, commencement à partir du noeud source (N1) le plus éloigné et poursuite vers l'aval jusqu'au noeud destinataire (N4),
- sélection d'un ensemble candidat de circuits se terminant audit noeud destinataire (N4) sur ledit segment,
- attribution de la largeur de bande pour ledit segment conformément au procédé selon l'une quelconque des revendications 1 à 6, tout en maintenant les circuits attribués précédemment au niveau du segment amont,
- itération jusqu'à ce qu'une solution soit trouvée,
- itération jusqu'à ce qu'une solution soit trouvée et que le noeud destinataire (N4) soit atteint.
